# EUROPÄISCHE PATENTSCHRIFT

(11) **EP 3 019 382 B1**
(45) Veröffentlichungstag und Bekanntmachung des Hinweises auf die Patenterteilung: **03.06.2020**
(21) Anmeldenummer: 14732085.7
(22) Anmeldetag: 14.06.2014
(51) Int. Cl.: B61K 9/08, E01B 35/00

(54) **VERFAHREN ZUR ERMITTLUNG EINER GLEIS-SOLLLAGE**
METHOD FOR DETERMINING A TARGET TRACK LOCATION
PROCÉDÉ DE DÉTERMINATION D'UNE POSITION THÉORIQUE D'UNE VOIE FERRÉE

(30) Priorität: 10.07.2013 AT 5702013
(43) Veröffentlichungstag der Anmeldung: 18.05.2016
(73) Patentinhaber: Plasser & Theurer Export von Bahnbaumaschinen Gesellschaft m.b.H., 1010 Wien (AT)
(72) Erfinder: AUER, Florian, A-1010 Wien (AT)
(86) Internationale Anmeldenummer: PCT/EP2014/001615
(87) Internationale Veröffentlichungsnummer: WO 2015/003772

(56) Entgegenhaltungen:
- WO-A1-93/06303
- AT-B- 353 487
- AT-B- 370 879
- FR-A1- 2 704 057
- GB-A- 2 452 619

## Beschreibung

Die Erfindung betrifft ein Verfahren zur Ermittlung einer durch einen neben einem Gleis positionierten Fest-punkt definierten Gleis-Solllage mit Hilfe eines auf dem Gleis verfahrbaren Lasersenders, mit dem die Lage des Festpunktes zum Gleis vermessen und eine eventuelle Abweichung der Solllage in bezug auf eine Istlage des Gleises registriert wird.

Durch die Fachzeitschrift "Rail Infrastructure", 31 (2003), Seiten 47 bis 49, ("Track machine guidance") ist ein Verfahren zur Ermittlung einer Differenz zwischen einer aktuellen Gleislage und einem Festpunkt bekannt. Ein während der Gleisvermessung stationäres und mit einem Lasersender ausgestattetes vorderes Messfahrzeug wird in Arbeitsrichtung bis zu einem nächstfolgenden, geodätisch vermessenen Festpunkt verfahren, der sich im Normalfall auf einem Fahrleitungsmast befindet. Der Lasersender wird bezüglich des in Gleisquerrichtung angrenzenden Festpunktes eingerichtet und damit in eine exakte Soll-Position gebracht.

Durch AT 370 879 bzw. AT 353487 ist es bekannt, eine Tunnelwand mittels eines Rotationslasers abzutasten, der sich auf einem Gleisfahrzeug befindet. Damit ist feststellbar, ob sich das Gleis in Relation zur Tunnelwand noch innerhalb einer vorschriftsmäßigen Position befindet.

Aus der WO 93/06303 A1 ist ein Verfahren zur Ermittlung einer eventuellen Abweichung der Solllage in bezug auf eine Istlage des Gleises bekannt.

Die Aufgabe der vorliegenden Erfindung liegt nun in der Schaffung eines Verfahrens der eingangs genannten Art, mit dem eine vereinfachte Positionserfassung eines die exakte Gleislage definierenden Festpunktes möglich ist.

Diese Aufgabe wird erfindungsgemäß mit einem Verfahren der gattungsgemäßen Art durch die im Kennzeichen des Hauptanspruches angeführten Merkmale gelöst.

Durch die Kombination dieser Verfahrensschritte ist es nun erstmals möglich, die Position des Festpunktes im Rahmen einer kontinuierlichen Maschinenvorfahrt rasch und automatisch zu erkennen. Mit Hilfe der von der Gleisumgebung deutlich abweichenden Gestalt der Abtasthilfe kann eine Fehlinterpretation der Festpunktlage weitgehend ausgeschlossen werden.

Weitere Vorteile der Erfindung ergeben sich aus der Zeichnungsbeschreibung.

Im Folgenden wird die Erfindung anhand in der Zeichnung dargestellter Ausführungsbeispiele näher beschrieben. Es zeigen: Fig. 1 eine Seitenansicht und Fig. 2 eine Vorderansicht eines Messfahrzeuges, Fig. 3 eine vergrößerte Darstellung eines Festpunktes, Fig. 4 eine aus der Laserabtastung gebildete Punktwolke und Fig. 5, 6 je eine weitere Möglichkeit einer Ausbildung einer mit dem Festpunkt zu verbindenden Abtasthilfe.

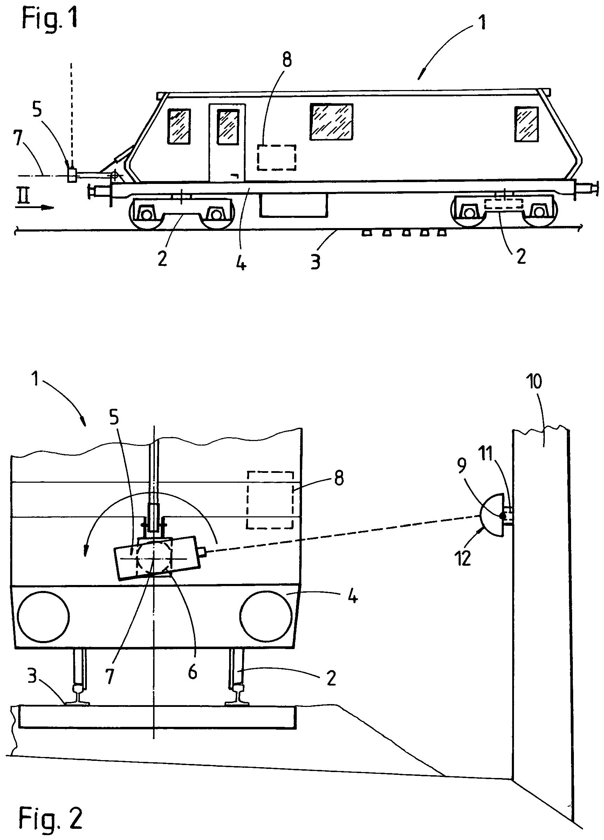

Ein in Fig. 1 und 2 dargestelltes Messfahrzeug 1 ist durch Schienenfahrwerke 2 auf einem Gleis 3 verfahrbar. An einem Ende eines Maschinenrahmens 4 ist ein Rotationslaser 5 angeordnet, der durch einen Antrieb 6 um eine in Maschinenlängsrichtung verlaufende Achse 7 rotierbar ist. Der Rotationslaser 5 ist als Sender und Empfänger für Laserstrahlen ausgebildet und kann damit die Entfernung zum Reflexionspunkt sowie dessen Raumposition genauestens errechnen. Dazu ist eine entsprechende Software in einer Recheneinheit 8 vorgesehen.

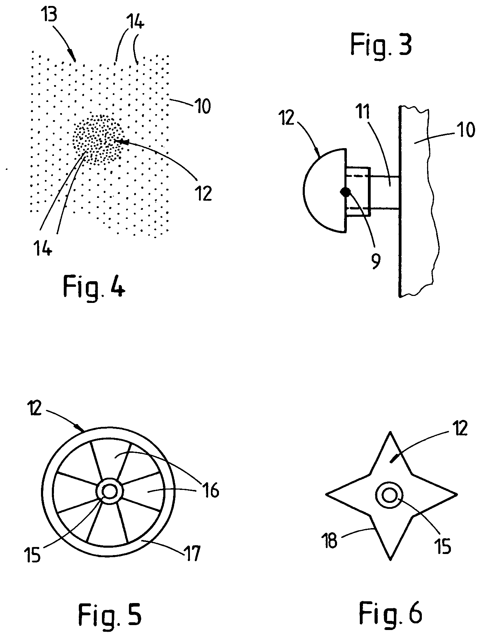

In Fig. 2, 3 ist ein auf einem Fahrleitungsmasten 10 befestigter und einen Festpunkt 9 aufweisender Mastbolzen 11 dargestellt. Auf diesen ist eine halbkugelförmige, mit einer die Reflexion optimierenden Beschichtung versehene Abtasthilfe 12 aufgesteckt, deren Kugelmittelpunkt mit dem Festpunkt 9 identisch ist. Damit weist der Festpunkt eine von einer Gleisumgebung deutlich abweichende, räumlich vergrößerte Gestalt auf. Natürlich könnte hier die dreidimensionale Abtasthilfe ebenso kugelförmig ausgebildet sein, wobei wiederum der Einfachheit halber der Kugelmittelpunkt mit dem Festpunkt 9 identisch sein sollte.

Wie in Fig. 4 ersichtlich, entsteht aus der Abtastung der Gleisumgebung durch den sich permanent um die Achse 7 drehenden und durch die Maschinenvorfahrt vorwärts bewegten Rotationslaser 5 eine Summe von als Punktwolke 13 bezeichneten Abtastpunkten 14. In Verbindung mit der Kombination von Entfernungsmessung und räumlicher Positionserfassung sind einerseits die den Fahrleitungsmasten 10 deutlich abzeichnenden Abtastpunkte 14 sowie andererseits auch die die halbkugelförmige Abtasthilfe 12 wiedergebenden Abtastpunkte 14 durch die Software deutlich unterscheidbar. Die Software kann - basierend auf den kreisförmigen Umrisslinien der Abtasthilfe 12 - die Position des Mittelpunktes und damit des Festpunktes 9 errechnen. In Verbindung mit dem eine Ist-Lage des Gleises 3 abtastenden Schienenfahrwerk 2 werden eventuelle Korrekturwerte als Differenz zwischen einer durch den Festpunkt 9 definierten Gleis-Solllage und der Istlage errechnet und für eine spätere Verwendung durch eine Stopfmaschine abgespeichert. Eine weitere vorteilhafte Ausbildung einer dreidimensionalen Abtasthilfe 12 wäre in Form einer Pyramide.

Durch Fig. 5 und 6 sind beispielhaft weitere mögliche Abtasthilfen 12 dargestellt, die sich deutlich von der Gleisumgebung abheben und damit zweifelsfrei durch den Rotationslaser 5 bzw. die Software zur Auswertung der Abtastpunkte 14 automatisch lokalisierbar sind.

Die als weiteres Beispiel aufgezeigte Abtasthilfe in Fig. 5 besteht aus einer auf den Festpunkt aufschiebbaren Hülse 15, die über Streben 16 mit einem konzentrischen Ring 17 verbunden und damit zweidimensional ausgebildet ist.

Eine weitere zweidimensionale Variante der Abtasthilfe 12 gemäß Fig. 6 ist als sternförmige Scheibe 18 ausgebildet, die mittels der zentrisch positionierten Hülse 15 auf den Festpunkt 9 aufsteckbar ist.

Die Abtasthilfen 12 sind generell leichter lokalisierbar, wenn sie deutlich vom angrenzenden Fahrleistungsmasten 10 distanziert sind, wodurch in Verbindung mit der Entfernungsmessung durch den Rotationslaser 5 die den Fahrleitungsmasten 10 wiedergebenden Abtastpunkte problemlos weggefiltert werden können.

## Patentansprüche

1. Verfahren zur Ermittlung einer durch einen neben einem Gleis positionierten Festpunkt (9) definierten Gleis-Solllage mit Hilfe eines auf dem Gleis (3) verfahrbaren Lasersenders, mit dem die Lage des Festpunktes (9) zum Gleis (3) vermessen und eine eventuelle Abweichung der Solllage in bezug auf eine Istlage des Gleises (3) registriert wird,
**gekennzeichnet durch** folgende Schritte:
a) jeder Festpunkt (3) wird mit einer dreidimensional ausgebildeten Abtasthilfe (12) verbunden, die eine von einer Gleisumgebung deutlich abweichende und den Festpunkt (9) räumlich vergrößernde, vorzugsweise kugelförmige Gestalt aufweist,
b) die Gleisumgebung wird permanent durch einen kontinuierlich am Gleis entlang bewegten Rotationslaser (5) abgetastet und als Punktwolke (13) registriert,
c) aus der Punktwolke (13) wird mit Hilfe einer Software die charakteristische Form der Abtasthilfe (12) ermittelt und es erfolgt automatisch eine Berechnung der Lage des zugeordneten Festpunktes (9) in Bezug auf das Gleis (3) sowie die Registrierung eventueller Korrekturwerte als Differenz zwischen der Soll- und Istlage des Gleises.

## Claims

1. A method of determining a target position of a track, defined by a fixed point (9) located next to a track, with the aid of a laser transmitter which is mobile on the track (3) and by means of which the position of the fixed point (9) relative to the track (3) is surveyed and a possible deviation of the target position with regard to an actual position of the track (3) is registered,
**characterized by** the following steps:
a) each fixed point (3) is connected to a three-dimensionally formed scanning aid (12) which has a preferably spherical shape distinctly differing from a track environment and spatially enlarging the fixed point (9),
b) the track environment is constantly scanned by a rotary laser (5), moved continuously along the track, and registered as a point cloud (13),
c) with the aid of a software, the characteristic shape of the scanning aid (12) is determined from the point cloud (13), and there follows an automatic computation of the position of the associated fixed point (9) with respect to the track (3) as well as the registering of possible correction values as the difference between the target- and actual position of the track.

## Revendications

1. Procédé de détermination d'une assiette de consigne de voie définie par un point fixe (9) positionné à côté d'une voie ferrée à l'aide d'un émetteur laser pouvant être déplacé sur la voie ferrée (3) avec lequel la position du point fixe (9) par rapport à la voie ferrée (3) est mesurée et un éventuel écart de l'assiette de consigne par rapport à une assiette réelle de la voie ferrée (3) est enregistré,
**caractérisé par les étapes suivantes :**
a) chaque point fixe (3) est connecté à une aide au balayage (12) réalisée de manière tridimensionnelle qui présente une configuration s'écartant nettement de l'environnement de la voie et agrandissant de manière spatiale le point fixe (9), de préférence sphérique,
b) l'environnement de la voie est balayé en permanence par un laser rotatif (5) déplacé en continu le long de la voie ferrée et enregistré en tant que nuage de points (13),
c) la forme caractéristique de l'aide au balayage (12) est déterminée à partir du nuage de points (13) à l'aide d'un logiciel et il en résulte automatiquement un calcul de la position du point fixe associé (9) par rapport à la voie ferrée (3) ainsi que l'enregistrement d'éventuelles valeurs de correction en tant que différence entre l'assiette de consigne et réelle de la voie ferrée.
